# FASCICULE DE BREVET EUROPEEN

(11) **EP 4 309 937 B1**
(45) Date de publication et mention de la délivrance du brevet: **05.03.2025**
(21) Numéro de dépôt: 23184285.7
(22) Date de dépôt: 07.07.2023
(51) Int. Cl.: B60K 1/04

(54) **ENGIN DE TRAVAIL AVEC UNE CABINE SITUEE LATERALEMENT ET UN MODULE DE BATTERIES FIXE SOUS LA CABINE**
ARBEITSMASCHINE MIT EINER SEITLICH ANGEORDNETEN KABINE UND EINEM UNTER DER KABINE BEFESTIGTEN BATTERIEMODUL
WORKING MACHINE WITH A LATERALLY SITUATED CAB AND A BATTERY MODULE FIXED BENEATH THE CAB

(30) Priorité: 18.07.2022 FR 2207339
(43) Date de publication de la demande: 24.01.2024
(73) Titulaire: MANITOU BF, 44150 Ancenis (FR)
(72) Inventeur: LEON, David, 44150 Ancenis (FR)
(74) Mandataire: Loyer & Abello

(56) Documents cités:
- EP-A1- 2 584 101
- FR-A1- 3 018 797
- US-A1- 2019 389 705

## Description

### Domaine technique

L'invention se rapporte à un engin de travail comprenant un bras de levage et un module de batteries pour fournir de la puissance électrique à l'engin de travail.

### Arrière-plan technologique

On connaît par le document JP 2005-262978 A un engin de travail comprenant un châssis mobile déplaçable sur la surface du sol, le châssis comportant deux longerons parallèles entre eux et s'étendant parallèlement à un axe avant-arrière de l'engin, et un bras de levage, le bras de levage étant monté entre les deux longerons de façon à être mobile à pivotement par rapport aux deux longerons.

Dans le document JP 2005-262978 A, la puissance nécessaire au fonctionnement de l'engin de travail est fournie par un moteur à combustion interne. Or, il existe une demande de plus en plus forte pour des engins de travail à motorisation électrique. US 2019/389705 A1 divulgue un engin de travail selon le préambule de la revendication 1.

Toutefois, pour des engins de travail destinés au levage, la puissance nécessaire pour la propulsion du châssis et pour l'actionnement du bras de levage est importante.

### Résumé

Certains aspects de l'invention partent du constat que pour que l'autonomie de l'engin de travail à motorisation électrique ne soit pas trop faible, celui-ci doit emporter un volume conséquent d'éléments de batterie ; et qu'il est donc nécessaire de trouver une solution pour positionner les éléments de batterie dans l'engin de travail. D'autre part, il convient que la solution retenue soit simple à mettre en oeuvre lors de l'assemblage ou de la maintenance de l'engin de travail.

Une idée à la base de l'invention consiste à pouvoir positionner un module de batteries sous une cabine de l'engin de travail lorsque celle-ci est située sur un côté de l'engin de travail.

L'invention est définie par l'objet de la revendication indépendante 1. D'autres modes de réalisation de l'invention font l'objet des revendications dépendantes.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La figure 1 est une vue en perspective d'ensemble d'un engin de travail.
[Fig.2] La figure 2 est une vue de côté du châssis et des essieux de l'engin de travail de la figure 1.
[Fig. 3] La figure 3 est une vue partielle en perspective et de dessous du châssis et des essieux de l'engin de travail de la figure 1.
[Fig. 4A] La figure 4A est une vue en perspective d'une structure de réception et d'une structure de fixation pour un module de batteries.
[Fig. 4B] La figure 4B est une vue en perspective de la structure de réception et de la structure de fixation de la figure 4A, ensemble avec un élément de batterie.
[Fig. 4C] La figure 4C est une vue identique à la figure 4B à ceci près qu'une pluralité d'éléments de batterie sont installés pour former un module de batteries.
[Fig. 4D] La figure 4D est une vue en perspective du module de batteries de la figure 4C, ensemble avec un carénage.
[Fig. 5] La figure 5 est un diagramme fonctionnel représentant l'alimentation électrique de l'engin de travail des figures 1 à 3 à l'aide du module de batteries des figures 4A à 4D.
[Fig. 6] La figure 6 est une vue partielle en perspective d'un longeron du châssis de l'engin de travail et de bras de fixation faisant saillie de ce longeron.
[Fig. 7A] La figure 7A est une vue analogue à la figure 6, montrant une première étape de l'installation du module de batteries des figures 4A à 4C au moyen des bras de fixation.
[Fig. 7B] La figure 7B est une vue analogue à la figure 7A, montrant une deuxième étape de l'installation du module de batteries des figures 4A à 4C au moyen des bras de fixation.
[Fig. 8] La figure 8 est une vue partielle en perspective et de dessus de l'engin de travail de la figure 1, sans le bras de levage.
[Fig. 9] La figure 9 est une vue partielle en perspective montrant une variante du module de batteries qui est prévue pour être fixé directement à un longeron, dans une position de fixation qui est située sous la cabine de l'engin de travail suivant une direction verticale de l'engin de travail.
[Fig. 10] La figure 10 est une vue agrandie d'une partie de la figure 9, montrant plus précisément la fixation du module de batteries.
[Fig. 11A] La figure 11A est une vue partielle en perspective montrant une autre variante du module de batteries qui est prévue pour être fixé indirectement à un longeron, dans une position de fixation qui est située sous la cabine de l'engin de travail suivant une direction verticale de l'engin de travail.
[Fig. 11B] La figure 11B est une vue analogue à la figure 11A montrant le module de batteries fixé aux plaques de retenue visibles sur la figure 11A.
[Fig. 11C] La figure 11C est une vue montrant le module de batteries fixé aux plaques de retenue comme sur la figure 11B, de côté perpendiculairement à l'une des plaques de retenue.

### Description des modes de réalisation

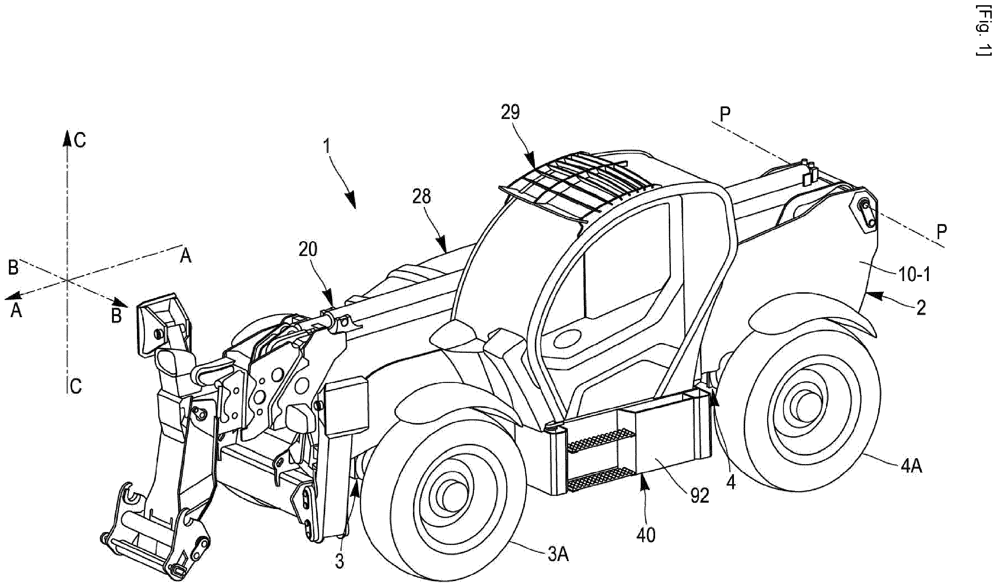

La figure 1 est une vue d'ensemble en perspective d'un engin de travail 1, ci-après désigné par « l'engin 1 » par commodité. L'engin 1 est réalisé ici sous la forme d'un chariot élévateur télescopique.

Sur les figures, la flèche A-A désigne une direction longitudinale de l'engin 1, la flèche B-B désigne une direction transversale de l'engin 1, et la flèche C-C désigne une direction verticale de l'engin 1. La direction longitudinale A-A est une direction avant-arrière de l'engin 1. La direction transversale B-B est une direction gauche-droite de l'engin 1 et est perpendiculaire à la direction longitudinale A-A. La direction verticale C-C est perpendiculaire à la direction longitudinale A-A et à la direction transversale B-B.

L'engin 1 comprend un châssis 2 et un bras de levage 20.

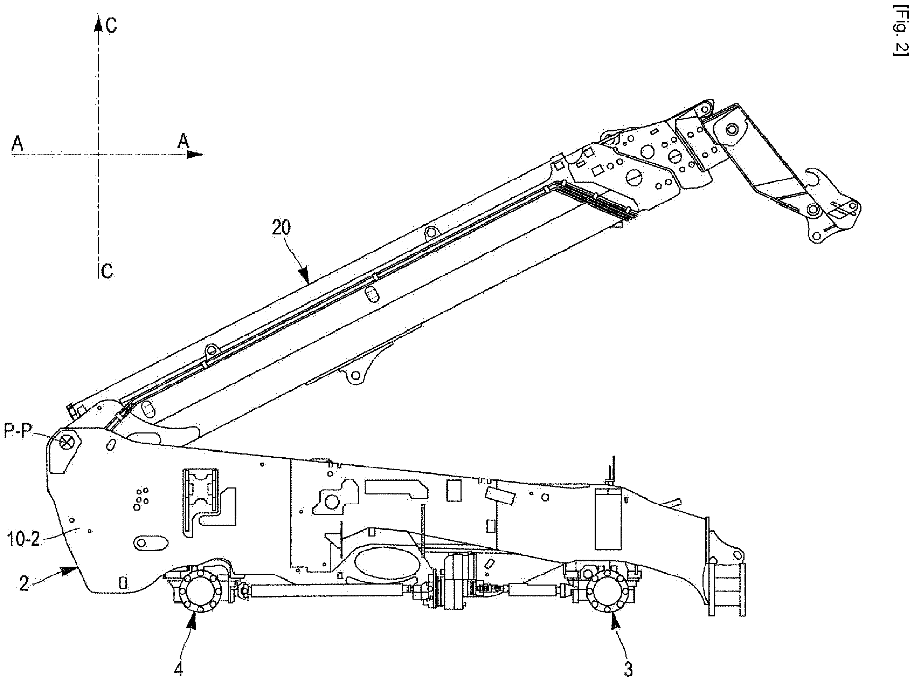

Le châssis 2 comporte deux longerons 10-1 et 10-2, qui sont mieux visibles en particulier sur la figure 2, la figure 3 et la figure 8. Les longerons 10-1, 10-2 sont des pièces métalliques globalement plates, parallèles entre elles et s'étendant parallèlement à la direction longitudinale A-A.

Le châssis 2 est mobile et déplaçable sur la surface du sol (non représentée sur les dessins), par le biais d'un essieu avant 3 portant deux roues 3A, l'une à gauche et l'autre à droite, et d'un essieu arrière 4 portant deux roues 4A, l'une à gauche et l'autre à droite. L'essieu avant 3 et l'essieu arrière 4 sont espacés suivant la direction longitudinale A-A.

Comme cela est mieux visible en particulier sur la figure 1 et la figure 2, le bras de levage 20 s'étend, comme les longerons 10-1, 10-2, parallèlement à la direction longitudinale A-A. Le bras de levage 20 est articulé aux deux longerons 10-1, 10-2, entre les deux longerons 10-1, 10-2, de façon à être mobile à pivotement par rapport aux deux longerons 10-1, 10-2 autour d'un axe de pivotement P-P (cf. figure 1 et figure 2). L'axe de pivotement P-P s'étend suivant la direction transversale B-B.

Le bras de levage 20 peut être réalisé de différentes manières, notamment sous la forme de plusieurs sections télescopiques comme représenté, ou en variante sous la forme d'un bras de longueur fixe. Une extrémité du bras de levage 20 opposée à l'axe de pivotement P peut porter un outil de travail ou, comme représenté sur la figure 1, un porte-outil modulaire susceptible de recevoir des outils de travail de plusieurs types, selon la technique connue. Par outil de travail, on désigne par exemple une paire de fourches, un godet, un treuil, une pince, etc.

En référence à la figure 2, l'axe de pivotement P-P est situé en arrière de l'essieu arrière 4 suivant la direction longitudinale A-A de l'engin 1. Il est en outre situé au-dessus de l'essieu avant 3 et de l'essieu arrière 4 suivant la direction verticale C-C de l'engin 1.

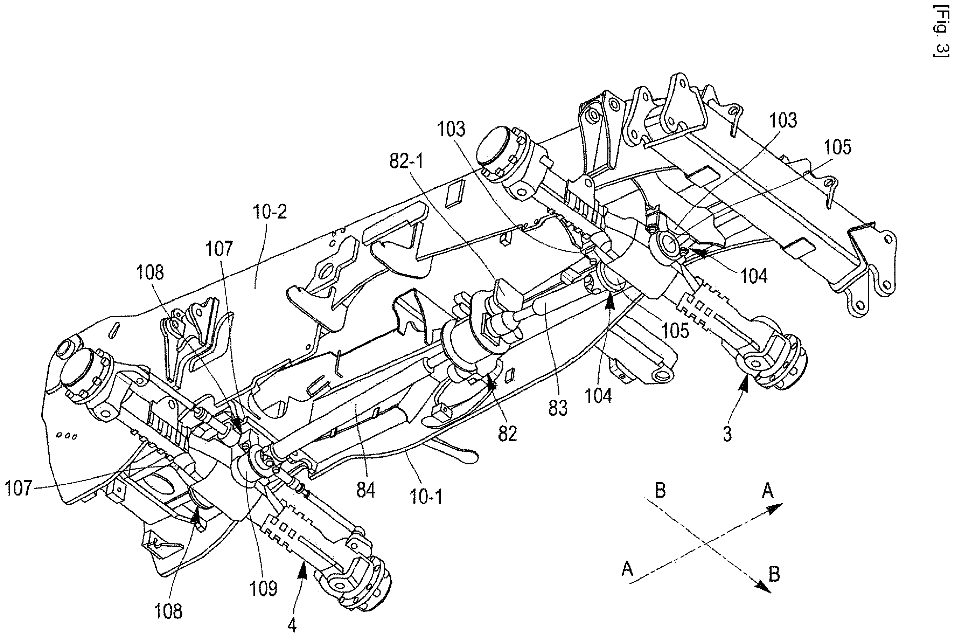

En référence à la figure 3, l'essieu avant 3 est fixé aux longerons 10-1, 10-2 via deux platines de support avant 103, chacune solidaire du longeron 10-1 et du longeron 10-2.

Un palier radial 104 est fixé, ici par boulonnage, à chacune des platines de support avant 103. L'essieu avant 3 comporte deux tourillons 105. Chacun des tourillons 105 est reçu dans un palier radial 104. Ainsi l'essieu avant 3 est maintenu en position par rapport au châssis 2 suivant la direction longitudinale A-A tout en étant capable de pivoter par rapport au châssis 2.

De façon analogue, toujours en référence à la figure 3, l'essieu arrière 4 est fixé aux longerons 10-1, 10-2 via deux platines de support arrière 107, chacune solidaire du longeron 10-1 et du longeron 10-2. Un palier radial 108 est fixé, ici par boulonnage, à chacune des platines de support arrière 107. L'essieu arrière 4 comporte deux tourillons 109. Chacun des tourillons 109 est reçu dans un palier radial 108. Ainsi l'essieu arrière 4 est maintenu en position par rapport au châssis 2 suivant la direction longitudinale A-A tout en étant capable de pivoter par rapport au châssis 2.

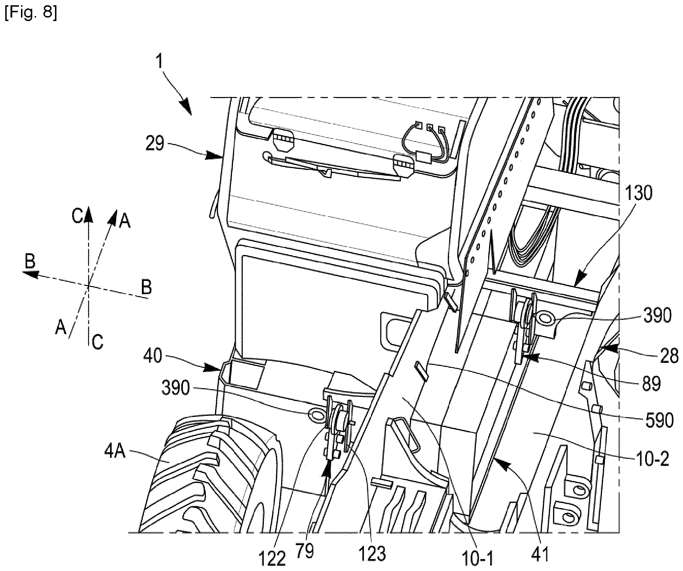

On voit en outre sur la figure 1 et sur la figure 8 que l'engin 1 comprend une cabine 29 dans lequel un conducteur de l'engin 1 peut prendre place, et un caisson 28 pouvant recevoir divers équipements de l'engin 1. La cabine 29 fait saillie du longeron 10-1 dans une direction opposée au longeron 10-2 et le caisson 28 fait saillie du longeron 10-2 dans une direction opposée au longeron 10-1. Plus concrètement, le caisson 28 est disposé le long du longeron 10-2, extérieurement à ce longeron 10-2 suivant la direction transversale B-B. Par « extérieurement à un longeron suivant la direction transversale B-B », on entend que le caisson 28 n'est pas situé entre les longerons 10-1, 10-2 mais au contraire en dehors de l'espace entre les longerons 10-1, 10-2. La cabine 29 pourrait aussi être disposée le long du longeron 10-1, extérieurement à ce longeron 10-1 suivant la direction transversale B-B. Toutefois, comme représenté sur la figure 8, il est préférable que la cabine 29 s'étende aussi jusqu'au-dessus de l'espace entre les longerons 10-1 et 10-2, ce qui permet d'augmenter un volume interne de la cabine 29.

Bien que les dessins et la description qui va suivre présentent la cabine 29 disposée en saillie du longeron 10-1 situé à gauche de l'engin 1 et le caisson 28 disposé en saillie du longeron 10-2 situé à droite de l'engin 1, il est bien entendu que l'agencement inverse est aussi possible, c'est-à-dire que l'agencement des longerons 10-1, 10-2 peut être inversé.

Comme représenté, la cabine 29 et le caisson 28 sont disposés entre l'essieu avant 3 et l'essieu arrière 4 suivant la direction longitudinale A-A.

Toujours en référence à la figure 1 et à la figure 8, un module de batteries 40 est disposé sous la cabine 29 suivant la direction verticale C-C. Le module de batteries 40 est destiné à alimenter en électricité au moins un moteur électrique de l'engin 1 comme cela sera décrit ci-après.

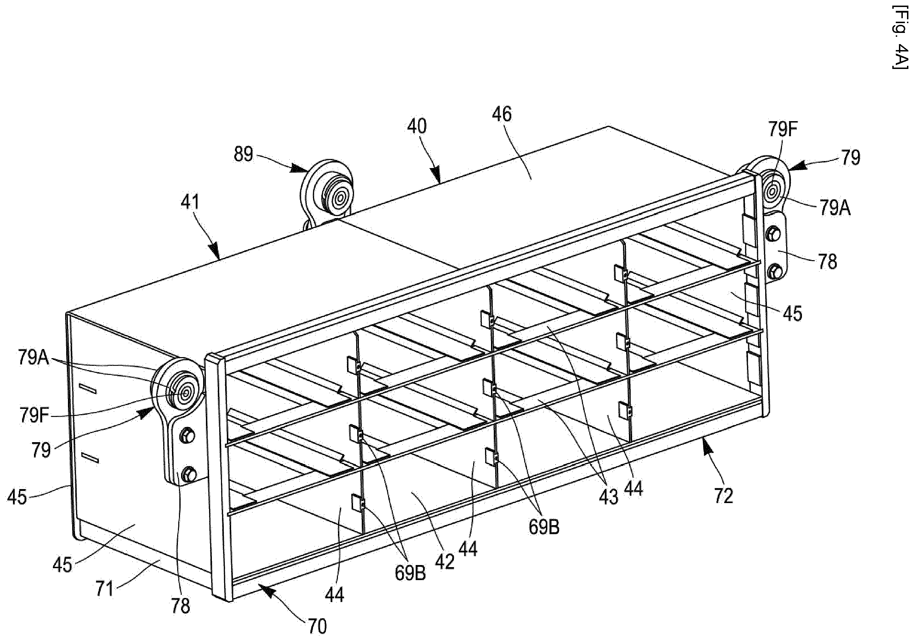

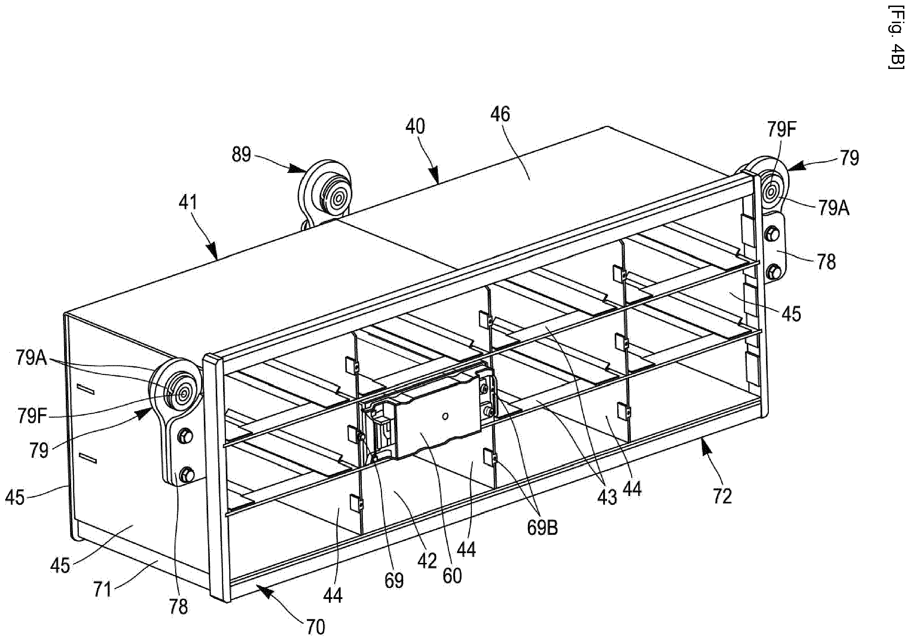

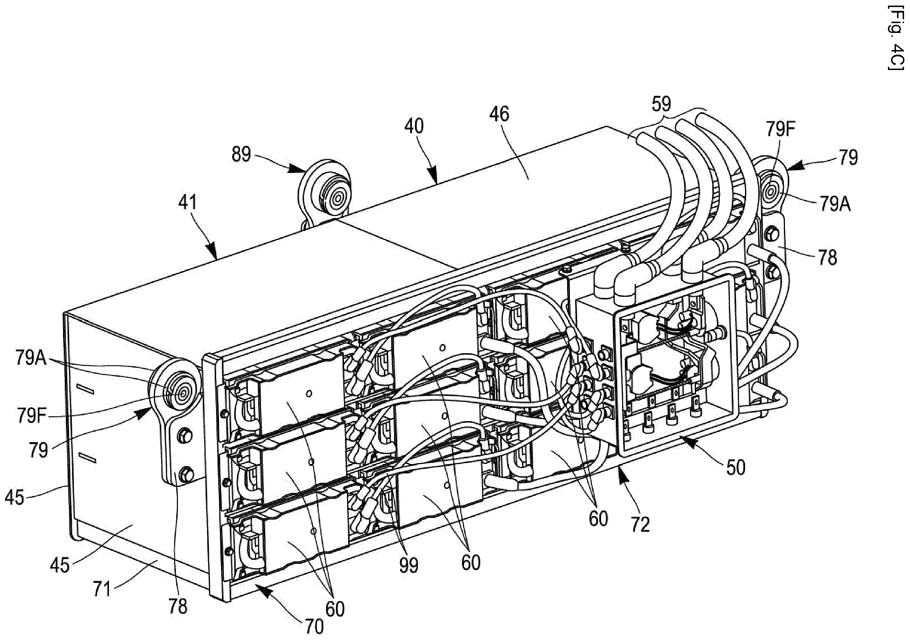

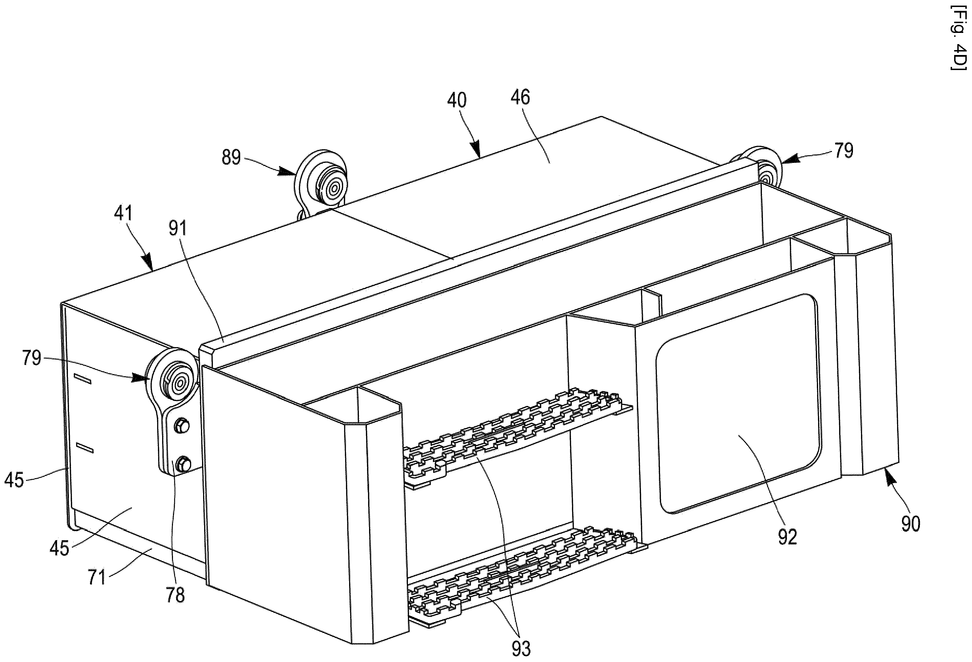

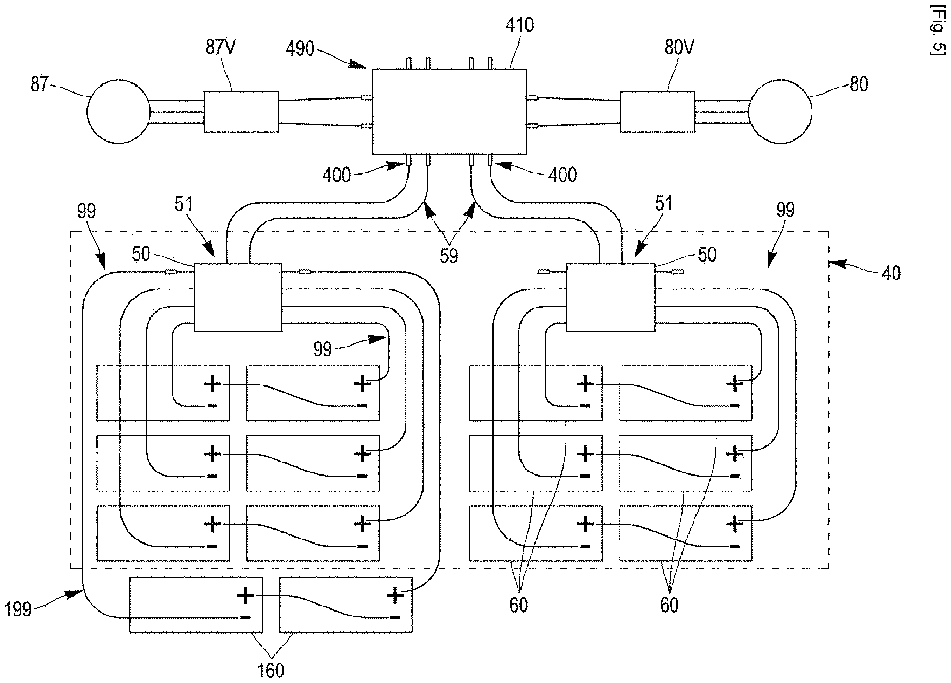

On décrit maintenant le module de batteries 40 en référence aux figures 4A, 4B, 4C, 4D et 5. Comme représenté, le module de batteries 40 est globalement parallélépipédique et comprend une structure de réception 41. En référence à la figure 4A, la structure de réception 41 comprend une plaque de fond 42, une plaque supérieure 46 parallèle à la plaque de fond 42, et des plaques latérales 45 s'étendant perpendiculairement à la plaque supérieure 46 et à la plaque de fond 42, de telle sorte que la plaque de fond 42, la plaque supérieure 46 et les plaques latérales 45 définissent ensemble un volume de réception pour des éléments de batterie 60.

Au moins deux éléments de batterie 60 (cf. figure 4C) reposent sur une face supérieure (c'est-à-dire tournée vers le haut suivant la direction verticale C-C) de la plaque de fond 42. En outre, la structure de réception 41 peut comprendre un ou plusieurs éléments de support intermédiaires 43 (cf. figure 4A et figure 4B), plans et parallèles à la plaque de fond 42, et d'autres éléments de batterie 60 reposent sur ce ou ces éléments de support intermédiaires 43.

Des plaques de séparation 44 (cf. figure 4A et figure 4B) peuvent s'étendre perpendiculairement à la plaque de fond 42 et aux éléments de support intermédiaires 43, de façon à définir des sous-volumes, chacun des sous-volumes étant dimensionné pour la réception d'un élément de batterie 60.

De façon connue en soi, chaque élément de batterie 60 comprend un boîtier parallélépipédique renfermant la ou les cellules électrolytiques générant la tension aux bornes de l'élément de batterie 60. L'élément de batterie 60 est par exemple du type lithium-ion ou autre. Dans l'exemple représenté, l'une des faces du boîtier porte un système de gestion de batterie (« Battery Management System » ou BMS en anglais) qui, toujours de façon connue en soi, surveille et gère la charge et la décharge de l'ensemble des cellules électrolytiques de l'élément de batterie 60. Ce système de gestion de batterie porte également les bornes de sortie de l'élément de batterie 60. En variante, le système de gestion de batterie peut être mutualisé entre plusieurs éléments de batterie 60 et/ou intégré au boîtier de connexion 50 décrit ci-après.

En référence à la figure 4B et à la figure 4C, un élément de batterie 60 est reçu dans chaque sous-volume défini par la plaque de fond 42, les éléments de support intermédiaires 43 et les plaques de séparation 44. Chaque élément de batterie 60 est maintenu en place au moyen d'éléments de fixation amovibles 69 (cf. figure 4B), tels que des vis, qui sont reçus dans des trous borgnes 69B que présentent les plaques de séparation 44 (cf. figures 4A et 4B).

De préférence, les éléments de fixation amovibles 69 sont électriquement conducteurs et les plaques de séparation 44 sont électriquement conductrices, les plaques de séparation 44 sont connectées électriquement les unes aux autres et aux éléments de batterie 60 de façon à constituer une masse électrique commune aux éléments de batterie 60. On peut ainsi mettre tous les éléments de batterie 60 à la masse d'une façon très simple, sans câblage supplémentaire. Par exemple, les éléments de fixation amovibles 69 et les plaques de séparation 44 (et éventuellement d'autres éléments de la structure de réception 41) sont rendus électriquement conducteurs par un procédé de galvanisation, en particulier par électrozingage. L'électrozingage est particulièrement intéressant car il permet en outre de protéger les plaques de séparation 44 (et éventuellement d'autres éléments de la structure de réception 41) contre la corrosion.

Les éléments de batterie 60 sont connectés électriquement à au moins un boîtier de connexion électrique 50.

Dans un mode de réalisation représenté sur la figure 5, le module de batteries 40 comprend douze éléments de batterie 60, et chaque élément de batterie 60 délivre une tension de 48 V. Les éléments de batterie 60 sont branchés en série par paires pour fournir à chaque fois une tension de 96 V. Trois paires d'éléments de batterie 60 sont branchées en parallèle les unes avec les autres à un premier boîtier de connexion 50 au moyen de câbles électriques 99, et trois autres paires d'éléments de batterie 60 sont branchées en parallèle les unes avec les autres à un deuxième boîtier de connexion 50 au moyen de câbles électriques 99.

Chaque boîtier de connexion 50 comporte une prise de sortie de puissance 51 permettant le raccordement électrique du module de batteries 40 à une prise d'entrée de puissance 400 (cf. figure 5) de l'engin 1.

En référence à la figure 5, l'engin 1 comporte un boîtier de distribution de puissance 410 qui porte les prises d'entrée de puissance 400 et qui est configuré pour alimenter ou non les composants électriques de l'engin 1. De tels boîtiers de distribution de puissance sont connus en tant que tels et ne sont pas décrits en détail ici.

Le boîtier de distribution de puissance 410 est notamment connecté électriquement à un variateur électrique de vitesse 80V lui-même connecté électriquement à un moteur électrique 80 pour la propulsion du châssis 2, et à un variateur électrique de vitesse 87V lui-même connecté électriquement à un moteur électrique 87 pour l'actionnement du bras de levage 20. Les variateurs électriques de vitesse 80V et 87V sont ici du type onduleur triphasé, c'est-à-dire recevant en entrée une tension continue et fournissant en sortie une tension alternative triphasée. D'autres configurations électriques sont toutefois possibles.

De façon non représentée sur la figure 5, le boîtier de distribution de puissance 410 peut en outre être connecté électriquement à d'autres équipements électriques de l'engin 1, notamment un module de chauffage de la cabine 29, et/ou un module de climatisation de la cabine 29, et/ou un ou plusieurs convertisseurs continu-continu (DC/DC) pour l'alimentation électrique d'autres équipements électriques de l'engin, par exemple un feu de signalisation, un avertisseur sonore, etc.

Le boîtier de distribution de puissance 410 peut par exemple être reçu dans le caisson 28. Les boîtiers de connexion électrique 50 peuvent être disposés sous la cabine 29 du fait de leur positionnement sur le module de batteries 40.

Le nombre d'éléments de batterie 60 et de boîtiers de connexion 50 représenté sur la figure 5 n'est qu'un exemple. Un nombre plus ou moins grand d'éléments de batterie 60 et/ou de boîtiers de connexion 50 peuvent être prévus suivant la capacité de charge souhaitée du module de batteries 40.

En outre, comme représenté schématiquement sur la figure 5, afin d'accroître l'autonomie de l'engin 1, il est possible de prévoir que l'engin comporte un ou plusieurs (ici, deux) éléments de batterie supplémentaires 160. Les éléments de batterie supplémentaires 160 sont disposés ailleurs que dans le module de batteries 40, par exemple dans un compartiment dédié ménagé dans le châssis 2. Les éléments de batterie supplémentaires 160 sont connectés électriquement au boîtier de distribution de puissance 410, ici via l'un des boîtiers de connexion 50 au moyen de câbles électriques supplémentaires 199.

Comme on l'a déjà mentionné ci-dessus, le moteur électrique 80 assure la propulsion du châssis 2. En revenant à la figure 3, un arbre de sortie (non représenté) du moteur électrique 80 (non représenté sur la figure 3) entraîne deux arbres 83 et 84 via un réducteur 82. L'arbre 84 entraîne l'essieu arrière 4 et par là les roues 4A, et l'arbre 83 entraîne l'essieu avant 3 et par là les roues 3A. Le réducteur 82 peut avoir un ou plusieurs rapports de réduction. Il est à noter que les arbres 83 et 84 s'étendent ici sensiblement parallèlement à l'axe avant-arrière A-A de l'engin 1 et donc aux longerons 10-1, 10-2. Le repère 82-1 sur la figure 3 indique une position possible pour la connexion de l'arbre de sortie du moteur électrique 80 au réducteur 82. Toutefois, de très nombreux autres types de transmission de puissance vers l'essieu avant 3 et l'essieu arrière 4 sont possibles. Notamment, il peut y avoir un moteur électrique pour l'essieu avant 3 et un autre moteur électrique pour l'essieu arrière 4. Il est également possible de prévoir que le moteur électrique 80 entraîne une pompe hydraulique qui entraîne à son tour un moteur hydraulique pour l'essieu avant 3 et un autre moteur hydraulique pour l'essieu arrière 4.

Le moteur électrique 87 assure quant à lui l'actionnement du bras de levage 20. Selon un exemple, le moteur électrique 87 entraîne une pompe hydraulique, laquelle alimente des actionneurs hydrauliques, par exemple des vérins hydrauliques, pour actionner les mouvements du bras de levage 20. Les mouvements comportent par exemple les mouvements de montée-descente effectués par un vérin de levage situé sous le bras de levage 20, les mouvements d'extension-rétraction effectués par un vérin de télescopage situé dans le bras de levage 20, et les mouvements du porte-outil. Un tel actionnement hydraulique du bras de levage 20 est bien connu en tant que tel et n'est donc pas décrit en détail ici.

En revenant aux figures 4A et 4B, le module de batteries 40 comporte en outre une structure de fixation généralement désignée par 70.

La structure de fixation 70 comporte deux portions de fixation 79 de part et d'autre du module de batteries 40. Chacune des portions de fixation 79 comporte un trou traversant (non représenté) recevant un cylindre creux 79F.

La structure de fixation 70 peut en outre contribuer à rigidifier la structure de réception 41 et par là à rigidifier le module de batteries 40. Par exemple, dans le mode de réalisation représenté, la structure de fixation 70 comporte une plaque de fixation de fond 71 qui supporte la plaque de fond 41, et un cadre de maintien 72 rapporté à la plaque de fixation de fond 71 et qui maintient les plaques latérales 45 et la plaque supérieure 46. Par exemple le cadre de maintien 72 peut présenter des lamages ou des rainures (non représentées) dans lesquels sont engagées des extrémités des plaques latérales 45 et de la plaque supérieure 46.

Dans le mode de réalisation représenté, les portions de fixation 79 sont rapportées, par exemple par boulonnage, à des ailes 78. Les ailes 78 sont solidaires du cadre de maintien 72, par exemple par soudage.

La figure 4D montre que le module de batteries 40 peut comporter en outre un carénage 90. Le carénage 90 recouvre les éléments de batterie 60 et par là protège les éléments de batterie 60, notamment contre les chocs accidentels ou les accès non autorisés. Le carénage 90 est tourné vers l'extérieur de l'engin 1 dans la position de fixation du module de batteries 40 représentée sur la figure 1 et la figure 8.

Le carénage 90 est accroché de façon amovible à la structure de fixation 70. Ainsi, il est possible d'accéder aux éléments de batterie 60 en retirant le carénage 90. Dans l'exemple représenté, l'accrochage du carénage 90 est réalisé par coopération de forme entre au moins une rainure 91 que comporte le carénage 90 et le cadre de maintien 72.

En référence à la figure 1 et à la figure 4D, le carénage 90 peut présenter une trappe 92 permettant un accès à au moins l'un des boîtiers de connexion électrique 50 lorsque le carénage 90 est accroché à la structure de fixation 70, et/ou un ou plusieurs marchepieds 93 permettant à l'opérateur de l'engin 1 d'accéder à la cabine 29.

Comme représenté schématiquement sur la figure 5, le boîtier de distribution de puissance 410 peut comporter une prise de recharge 490 permettant de recharger les éléments de batterie 60. Dans ce cas, il est préférable que la trappe 92 permette également un accès à un compartiment dimensionné pour contenir un câble de recharge connectable électriquement à cette prise de recharge 490.

On décrit maintenant la fixation du module de batteries 40 sous la cabine 29 suivant la direction verticale C-C.

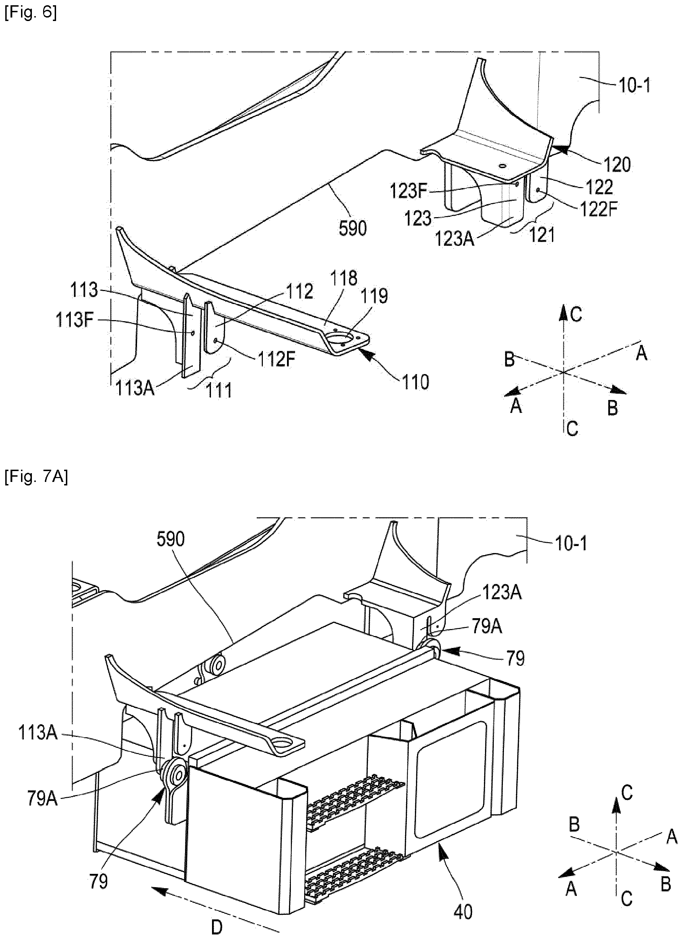

En référence à la figure 6, deux bras de fixation 110 et 120 font saillie du longeron 10-1. Les bras de fixation 110, 120 s'étendent sous la cabine 29 (non représentée sur la figure 6) suivant la direction transversale B-B. Les bras de fixation 110, 120 sont espacés l'un de l'autre suivant la direction longitudinale A-A.

Le bras de fixation 110 comporte une chape 111. La chape 111 se compose de deux joues 112, 113. Les joues 112, 113 sont parallèles entre elles et espacées l'une de l'autre suivant la direction transversale B-B. Les joues 112, 113 présentent des trous traversants 112F, 113F alignés.

De façon analogue, le bras de fixation 120 comporte une chape 121. La chape 121 se compose de deux joues 122, 123. Les joues 122, 123 sont parallèles entre elles et espacées l'une de l'autre suivant la direction transversale B-B. Les joues 122, 123 présentent des trous traversants 122F, 123F alignés.

Pour fixer le module de batteries 40 sous la cabine 29, on fait d'abord décrire à le module de batteries 40 un mouvement de translation D parallèlement à la direction transversale B-B, pour amener le module de batteries 40 jusqu'à la position représentée sur la figure 7A. Dans cette position, les portions de fixation 79 sont au contact de surfaces de glissement 113A, 123A (cf. figure 6 et figure 7A) que présentent respectivement les joues 113 et 123 et qui s'étendent suivant la direction verticale C-C et la direction longitudinale A-A.

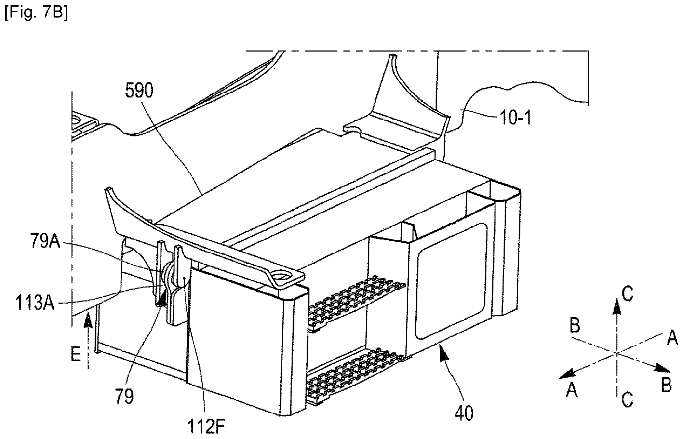

Ensuite, on fait décrire à le module de batteries 40 un mouvement de translation E parallèlement à la direction verticale C-C, pour amener le module de batteries 40 jusqu'à la position représentée sur la figure 7B. Ce mouvement de translation E est guidé par le glissement des portions de fixation 79 et les surfaces de glissement 113A, 123A. Dans la position représentée sur la figure 7B, les portions de fixation 79 sont engagées dans les chapes 111, 121, et les cylindres creux 79F sont alignés avec les trous traversants 112F, 113F, 122F, 123F.

Ensuite, on insère deux goupilles 390 (non représentées sur la figure 7B mais visibles sur la figure 8), l'une dans les trous traversants 112F, 113F à travers un cylindre creux 79F, et l'autre dans les trous traversants 122F, 123F à travers l'autre cylindre creux 79F. Le module de batteries 40 est alors fixé, via la structure de fixation 70 et les bras de fixation 110, 120, au longeron 10-1.

Pour faciliter le glissement décrit des portions de fixation 79 sur les surfaces de glissement 113A, 123A, les portions de fixation 79 peuvent être munies de supports élastiques 79A, par exemple en caoutchouc ou polymère, engagés sur les cylindres 79F. Ces supports élastiques 79A peuvent en outre amortir des vibrations dues au fonctionnement de l'engin 1 et ainsi protéger le module de batteries 40 contre ces vibrations.

On comprend bien que la fixation qui vient d'être décrite du module de batteries 40 est aisément amovible puisqu'il suffit de retirer les goupilles 390 et d'effectuer les étapes décrites ci-dessus dans l'ordre inverse pour retirer le module de batteries 40 de sous la cabine 29. Il est donc aisé de remplacer le module de batteries 40 lorsque cela est souhaité, par exemple pour remplacer un module de batteries 40 déchargé par un module de batteries 40 chargé.

D'autres façons de fixer le module de batteries 40 aux bras de fixation 110, 120 qu'au moyen de goupilles engagées dans les chapes 111, 121 sont possibles. Par exemple le module de batteries 40 pourrait être fixé par vissage ou boulonnage des portions de fixation 79 aux chapes 111, 121.

De façon avantageuse, en référence à la figure 8, le module de batteries 40 peut être dimensionné de façon à s'étendre en partie jusque sous un espace situé entre les longerons 10-1, 10-2. Ceci peut permettre d'accroître le volume des éléments de batterie 60 et donc la capacité totale de charge du module de batteries 40. Ceci peut en outre permettre d'améliorer l'équilibrage latéral de l'engin 1 puisque le centre de masse du module de batteries 40 est plus proche de l'axe médian de l'engin 1. Dans ce cas, le longeron 10-1 comporte une découpe 590 (cf. figures 6 à 8) pour permettre le passage du module de batteries 40. En outre, toujours en référence à la figure 8, il est avantageux que le châssis 2 comporte un bras de fixation supplémentaire 130 et que le module de batteries 40 comporte une portion de fixation supplémentaire 89. Le bras de fixation supplémentaire 130 s'étend entre les longerons 10-1, 10-2. Comme cela est visible sur les figures, le bras de fixation supplémentaire 130 est analogue aux bras de fixation 110, 120, et la portion de fixation supplémentaire 89 est analogue aux portions de fixation 79. Leur coopération est ainsi analogue à la coopération déjà décrite des portions de fixation 79 avec les bras de fixation 110, 120, et n'est donc pas décrite en détail à nouveau par souci de concision.

On précise que dans le mode de réalisation représenté, le bras de fixation 110 supporte la cabine 29. Pour cela, en référence à la figure 6, le bras de fixation 110 présente une surface 118 pour l'appui de la cabine 29. Le bras de fixation 110 peut en outre présenter un trou traversant 119 pour recevoir un support élastique (non représenté) disposé entre la cabine 29 et le bras de fixation 110. Dans d'autres variantes non représentées, le bras de fixation 110 et le bras de fixation 120 peuvent tous deux supporter la cabine 29. Dans encore d'autres variantes non représentées, le bras de fixation 120 peut supporter la cabine 29 et non le bras de fixation 110.

On décrit maintenant deux variantes du module de batteries permettant également la fixation de celui-ci sous la cabine 29 suivant la direction verticale C-C, mais par un mouvement de translation parallèlement à la direction transversale B-B et non par un mouvement de translation parallèlement à la direction transversale B-B suivi d'un mouvement de translation parallèlement à la direction verticale C-C. Les éléments identiques à ceux déjà décrits précédemment portent les mêmes signes de référence et ne sont pas décrits à nouveau sauf lorsque cela est nécessaire.

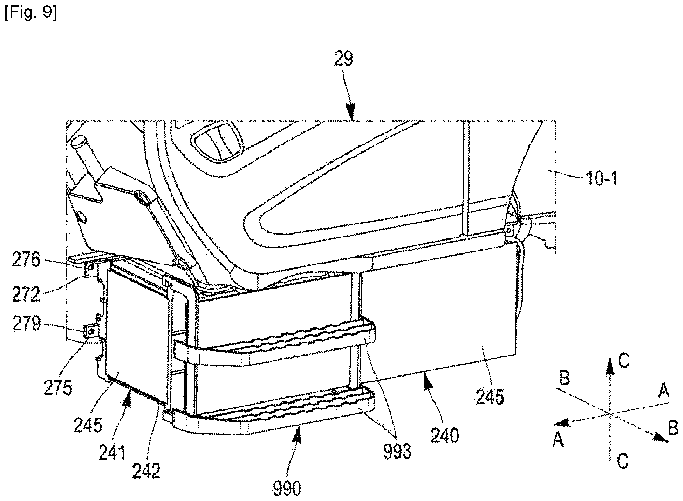

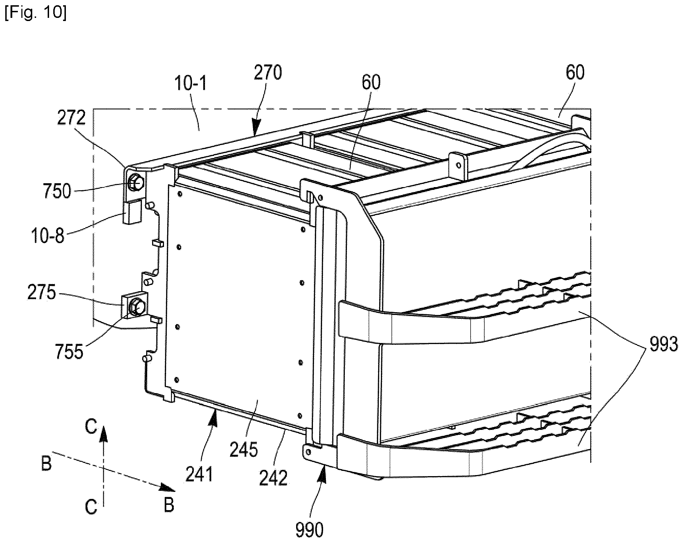

Dans la variante représentée sur la figure 9 et la figure 10, un module de batteries 240 est prévu pour être fixé directement au longeron 10-1, dans une position de fixation qui est située sous la cabine 29 suivant la direction verticale C-C.

Le module de batteries 240 est globalement parallélépipédique et comprend une structure de réception 241 et une structure de fixation 270. La structure de réception 241 se présente sous la forme d'un caisson parallélépipédique qui définit un volume de réception pour des éléments de batterie 60. La structure de réception 241 comporte ainsi une plaque de fond 242, et des plaques latérales 245 s'étendant perpendiculairement à la plaque de fond 242.

Au moins deux éléments de batterie 60 reposent sur une face supérieure (c'est-à-dire tournée vers le haut suivant la direction verticale C-C) de la plaque de fond 242. En outre, la structure de réception 241 peut comprendre un ou plusieurs éléments de support intermédiaires (non représentés), plans et parallèles à la plaque de fond 242, et d'autres éléments de batterie 60 reposent sur ce ou ces éléments de support intermédiaires.

Le module de batteries 240 comprend en outre le boîtier de connexion électrique 50 et la prise de sortie de puissance 51 déjà décrits ci-dessus. De façon non représentée, le boîtier de connexion électrique 50 peut être situé dans la structure de réception 241 ou bien être situé entre la structure de réception 241 et la cabine 29.

La structure de fixation 270 comprend un élément profilé 272. L'élément profilé 272 est solidaire de la structure de réception 241, de préférence par soudage par points. L'élément profilé 272 se présente ici sous la forme d'une cornière ayant une section en forme de « L » et s'étend tout le long de la structure de réception 241. L'élément profilé 272 présente, à chacune de ses deux extrémités, un trou traversant 276 (cf. figure 9) dimensionné pour recevoir un élément de fixation amovible 750 (cf. figure 10) tel qu'un boulon ou une vis. L'élément de fixation amovible 750 permet de fixer l'élément profilé 272 et par là le module de batteries 240 directement au longeron 10-1 grâce à des trous borgnes correspondants (non représentés) pratiqués dans le longeron 10-1.

On comprend bien que de cette manière, le module de batteries 240 peut être apporté sous la cabine 29 dans la position représentée sur la figure 9 et la figure 10, par un simple mouvement de translation parallèlement à la direction transversale B-B.

Le longeron 10-1 peut présenter, sous les éléments de fixation amovible 750 suivant la direction verticale C-C, une butée 10-8. L'élément profilé 272 repose sur la butée 10-8 lorsqu'il est fixé au longeron 10-1 par les éléments de fixation amovible 750, ce qui peut limiter un risque de cisaillement des éléments de fixation amovible 750.

La structure de fixation 270 peut en outre comprendre une barre de fixation supplémentaire 275 parallèle à l'élément profilé 272. La barre de fixation supplémentaire 275 s'étend tout le long de la structure de réception 241 et présente, à chacune de ses deux extrémités, un trou traversant 279 (cf. figure 9) dimensionné pour recevoir un élément de fixation amovible supplémentaire 755 (cf. figure 10) tel qu'un boulon ou une vis. De cette manière, le module de batteries 240 est fixé au longeron 10-1 en deux points à chacune de ses deux extrémités suivant la direction longitudinale A-A, ce qui assure davantage la fixation du module de batteries 240 au longeron 10-1.

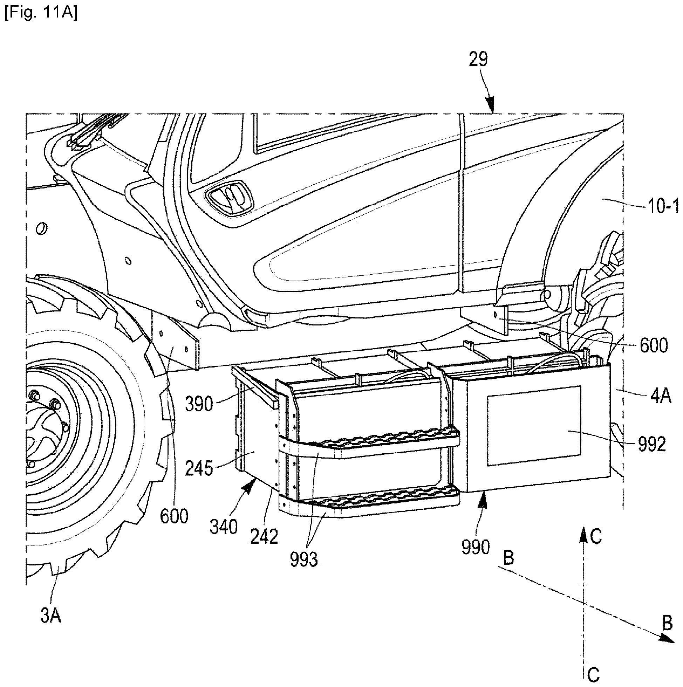

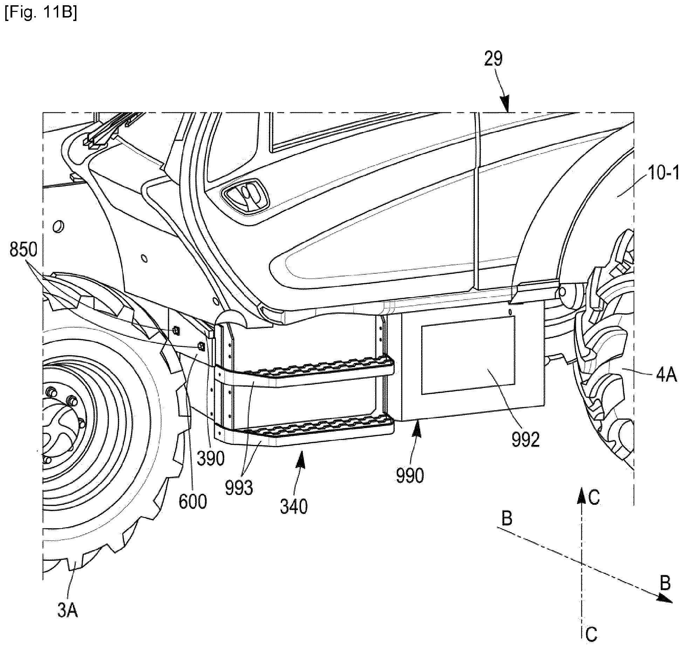

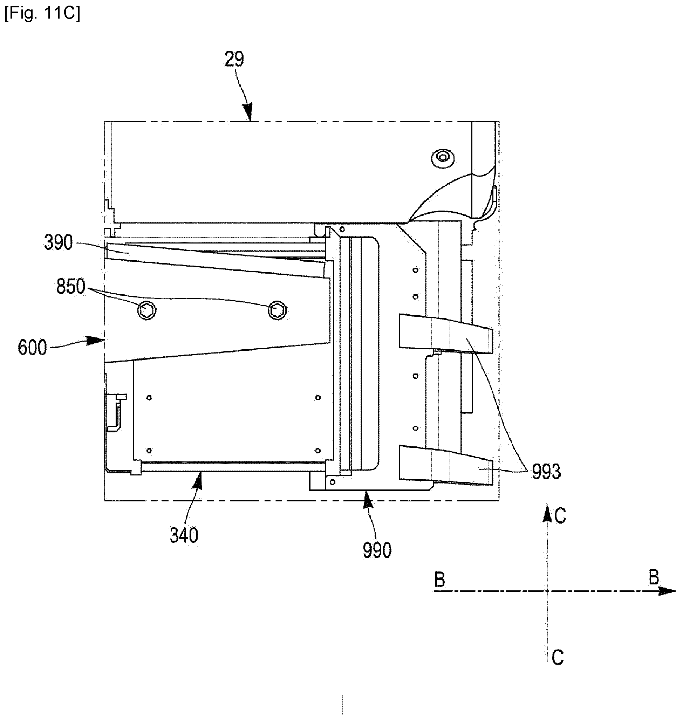

Dans la variante représentée sur la figure 11A, la figure 11B et la figure 11C, un module de batteries 340 est prévu pour être fixé indirectement au longeron 10-1, dans une position de fixation qui est située sous la cabine 29 suivant la direction verticale C-C. Les éléments identiques à ceux déjà décrits précédemment portent les mêmes signes de référence et ne sont pas décrits à nouveau sauf lorsque cela est nécessaire.

Le module de batteries 340 est identique au module de batteries 240 à ceci près que la fixation du module de batteries 340 s'effectue par vissage ou boulonnage grâce aux deux plaques latérales 245 en regard de la structure de réception 241 et non grâce à une structure de fixation distincte des plaques latérales 245. Plus concrètement, deux plaques de retenue 600 font saillie du longeron 10-1. Les plaques de retenue 600 sont situées sous la cabine 29 suivant la direction verticale C-C et s'étendent suivant la direction verticale C-C et la direction transversale B-B. Les plaques de retenue 600 sont espacées l'un de l'autre suivant la direction longitudinale A-A. Chacune des deux plaques latérales 245 comporte des trous borgnes ou traversants pour recevoir des éléments de fixation amovible 850 (cf. figure 11B et figure 11C) tels que des boulons ou des vis. Ainsi chacune des deux plaques latérales 245 est fixée de façon amovible à la plaque de retenue 600 en regard au moyen des éléments de fixation amovible 850.

On comprend bien que de cette manière, le module de batteries 340 peut être apporté sous la cabine 29 dans la position représentée sur la figure 11B et la figure 11C, par un simple mouvement de translation parallèle à la direction transversale B-B.

De façon avantageuse, le module de batteries 340 comporte deux éléments de guidage 390, dont un seul est visible sur les figures 11A, 11B et 11C. Les éléments de guidage 390 sont solidaires de la structure de réception 241. Chacun des deux éléments de guidage 390 coopère avec une extrémité supérieure de la plaque de retenue 600 de façon à guider le module de batteries 340 vers la position représentée sur la figure 11B. Les éléments de guidage 390 se présentent ici sous la forme de languettes. Dans des variantes non représentées, les éléments de guidage 390 peuvent avoir une forme différente, par exemple une forme de rail à section en « L » ou en « C ».

Dans la variante des figures 9 et 10 comme dans la variante des figures 11A et 11B, le module de batteries 240 ou 340 peut également comporter un carénage 990 amovible, qui présente une trappe 992 permettant un accès à au moins l'un des boîtiers de connexion électrique 50 et/ou à un compartiment de stockage d'un câble de recharge, et/ou un ou plusieurs marchepieds 993 permettant à l'opérateur de l'engin 1 d'accéder à la cabine 29.

Le fait de réaliser le module de batteries 40, 240, 340 au moyen d'une pluralité d'éléments de batterie 60 comme représenté permet de simplifier la maintenance du module de batteries 40, 240, 340, notamment parce qu'il est possible de remplacer un élément de batterie 60 individuel en cas de défaillance ou d'endommagement de celui-ci. Toutefois, en variante, le module de batteries 40, 240, 340 peut être réalisé sous la forme d'un module de batteries monolithique comportant une unique prise de sortie de puissance 51 connectable électriquement au boîtier de distribution de puissance 410. La fixation d'un tel module de batteries sous la cabine 29 suivant la direction verticale C-C est identique à ce qui a déjà été décrit ci-dessus.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. L'invention n'est définie que par l'étendue de la protection des revendications annexées et diverses modifications sont possibles dans le cadre de cet étendue de la protection.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Engin de travail (1) comprenant
- un châssis (2) comportant un premier longeron (10-1) et un deuxième longeron (10-2), le premier longeron (10-1) et le deuxième longeron (10-2) étant parallèles entre eux et s'étendant parallèlement à une direction longitudinale (A-A) de l'engin de travail (1) ; et un essieu avant (3) et un essieu arrière (4) espacés suivant la direction longitudinale (A-A) de l'engin de travail (1) ;
- un bras de levage (20) s'étendant parallèlement à la direction longitudinale (A-A) de l'engin de travail (1), le bras de levage (20) étant articulé aux longerons (10-1, 10-2) entre les deux longerons de façon à être mobile à pivotement par rapport aux longerons (10-1, 10-2) autour d'un axe de pivotement (P-P) s'étendant suivant une direction transversale (B-B) de l'engin de travail (1) qui est perpendiculaire à la direction longitudinale (A-A) de l'engin de travail (1) ;
- au moins un moteur électrique (80, 87) pour la propulsion du châssis (2) et optionnellement pour l'actionnement du bras de levage (20) ;
- une cabine (29) pour un opérateur de l'engin de travail (1), la cabine (29) étant en saillie du premier longeron (10-1) suivant la direction transversale (B-B) de l'engin de travail (1) dans une direction opposée au deuxième longeron (10-2), la cabine (29) étant disposée entre l'essieu avant (3) et l'essieu arrière (4) suivant la direction longitudinale (A-A) de l'engin de travail (1) ; et
- un module de batteries (40 ; 240 ; 340) pour alimenter le au moins un moteur électrique (80, 87) en électricité, **caractérisé en ce que**
le module de batteries (40 ; 240 ; 340) comprend une structure de fixation (70 ; 270) apte à être fixée de façon amovible au premier longeron (10-1), dans une position de fixation située sous la cabine (29) suivant une direction verticale (C-C) de l'engin de travail (1) qui est perpendiculaire à la direction longitudinale (A-A) et à la direction transversale (B-B) de l'engin de travail (1), et
dans lequel le module de batteries (40 ; 240 ; 340) dans la position de fixation est accessible depuis un côté extérieur de l'engin de travail (1) pour pouvoir être amené dans la position de fixation et retiré de la position de fixation depuis le côté extérieur de l'engin de travail (1), le côté extérieur de l'engin de travail (1) étant tourné dans la direction transversale (B-B) de l'engin de travail (1).

2. Engin de travail (1) selon la revendication 1, dans lequel la structure de fixation (270) comprend un élément profilé (272) qui est fixé de façon amovible, par exemple par boulonnage ou vissage, à ses deux extrémités directement au premier longeron (10-1).

3. Engin de travail (1) selon la revendication 2, dans lequel le premier longeron (10-1) comprend au moins une butée (10-8) qui est située sous l'élément profilé (272) suivant la direction verticale (C-C) de l'engin de travail (1) et sur laquelle l'élément profilé (272) repose lorsqu'il est fixé au premier longeron (10-1).

4. Engin de travail (1) selon la revendication 1, dans lequel l'engin de travail (1) comprend en outre deux plaques de retenue (600) faisant saillie du premier longeron (10-1), les deux plaques de retenue (600) étant situées sous la cabine (29) et s'étendant suivant la direction verticale (C-C) et la direction transversale (B-B) de l'engin de travail (1) et étant espacées l'une de l'autre suivant la direction longitudinale (A-A) de l'engin de travail (1), et la structure de fixation comprend deux plaques de fixation (245), chacune des deux plaques de fixation (245) étant fixée de façon amovible, par exemple par boulonnage ou vissage, à l'une des plaques de retenue (600).

5. Engin de travail (1) selon la revendication 4, dans lequel le module de batteries (340) comprend en outre deux éléments de guidage (390), chaque élément de guidage (390) étant destiné à coopérer avec une extrémité supérieure d'une dite plaque de retenue (600) de façon à guider le module de batteries (340) vers la position de fixation dans un mouvement de translation parallèlement à la direction transversale (B-B) de l'engin de travail (1).

6. Engin de travail (1) selon la revendication 1, dans lequel :
- l'engin de travail (1) comprend en outre deux bras de fixation (110, 120) faisant saillie du premier longeron (10-1), les deux bras de fixation (110, 120) s'étendant sous la cabine (29) suivant la direction transversale (B-B) de l'engin de travail (1) et étant espacés l'un de l'autre suivant la direction longitudinale (A-A) de l'engin de travail (1) ;
- la structure de fixation (70) comporte deux portions de fixation (79) ; et
- chacun des deux bras de fixation (110, 120) comporte une chape (111, 121), chacune des portions de fixation (79) étant fixée de façon amovible à l'une des chapes (111, 121).

7. Engin de travail (1) selon la revendication 6, dans laquelle au moins l'une des chapes (111, 121) comporte une surface de glissement (113A, 123A) s'étendant suivant la direction verticale (C-C) et la direction longitudinale (A-A) de l'engin de travail (1), et au moins une desdites portions de fixation (79) est configurée pour glisser sur la surface de glissement (113A, 123A) dans un mouvement de translation (E) parallèlement à la direction verticale (C-C) jusqu'à la position de fixation.

8. Engin de travail (1) selon la revendication 7, dans laquelle au moins une desdites portions de fixation (79) comporte un élément de glissement (79A) en polymère ou en caoutchouc pour glisser sur la surface de glissement (113A, 123A).

9. Engin de travail (1) selon l'une quelconque des revendications 6 à 8, dans lequel le module de batteries (40) s'étend en partie jusque sous un espace situé entre les longerons (10-1, 10-2).

10. Engin de travail (1) selon l'une quelconque des revendications 6 à 9, dans lequel au moins l'un des deux bras de fixation (110, 120) supporte la cabine (29).

11. Engin de travail (1) selon l'une quelconque des revendications 1 à 10, dans lequel un boîtier de distribution de puissance (410) est connecté électriquement audit au moins un moteur électrique (80, 87) et le module de batteries 40 ; 240 ; 340) comporte une unique prise de sortie de puissance (51) connectable électriquement au boîtier de distribution de puissance (410).

12. Engin de travail (1) selon la revendication 11, dans lequel le module de batteries (40 ; 240 ; 340) comprend :
- une plaque de fond (42 ; 242), la structure de fixation (70 ; 270) étant solidaire de ou supportant la plaque de fond 42 ; 242) ;
- au moins deux éléments de batterie (60) reposant sur une face supérieure de la plaque de fond (42 ; 242), suivant la direction verticale (C-C) ;
- au moins un boîtier de connexion électrique (50) connecté électriquement aux éléments de batterie (60), le boîtier de connexion électrique (50) comportant une prise de sortie de puissance (51) connectable électriquement au boîtier de distribution de puissance (410).

13. Engin de travail (1) selon la revendication 12, dans lequel le module de batteries (40 ; 240 ; 340) comporte des plaques de séparation (44) séparant les éléments de batterie (60) et auxquelles les éléments de batterie (60) sont fixés au moyen d'éléments de fixation amovibles (69), et dans lequel les éléments de fixation amovibles (69) et les plaques de séparation (44) sont électriquement conducteurs, les plaques de séparation (44) étant connectées électriquement les unes aux autres et aux éléments de batterie (60) de façon à constituer une masse électrique commune aux éléments de batterie (60).

14. Engin de travail (1) selon l'une quelconque des revendications 11 à 13, dans lequel le boîtier de distribution de puissance (410) comporte une prise de recharge pour recharger le module de batteries (40 ; 240 ; 340).

15. Engin de travail (1) selon l'une quelconque des revendications 1 à 14, dans lequel le module de batteries (40 ; 240 ; 340) comporte en outre un carénage (90 ; 990), le carénage (90 ; 990) étant tourné vers l'extérieur de l'engin de travail (1) suivant la direction transversale (B-B) dans la position de fixation du module de batteries (40 ; 240 ; 340), dans lequel le carénage (90 ; 990) comporte un ou plusieurs marchepieds (93 ; 993) permettant à l'opérateur de l'engin de travail (1) d'accéder à la cabine (29).

16. Engin de travail (1) selon la revendication 15 en combinaison avec la revendication 14, comprenant en outre un câble de recharge, le câble de recharge étant connectable électriquement à la prise de recharge (490), et dans lequel le carénage (90 ; 990) comporte une trappe (92 ; 992) permettant un accès à un compartiment dimensionné pour contenir le câble de recharge.

## Patentansprüche

1. Arbeitsmaschine (1), umfassend:
- ein Chassis (2) mit einem ersten Längsträger (10-1) und einem zweiten Längsträger (20-2), wobei der erste Längsträger (10-1) und der zweite Längsträger (10-2) zueinander parallel sind und sich in einer Längsrichtung (A-A) der Arbeitsmaschine (1) parallel erstrecken; und mit einer Vorderachse (3) und einer Hinterachse (4), die entlang der Längsrichtung (A-A) der Arbeitsmaschine (1) voneinander beabstandet sind;
- einen Hebearm (20), der sich parallel zur Längsrichtung (A-A) der Arbeitsmaschine (1) erstreckt, wobei der Hebearm (20) zwischen den beiden Längsträgeren derart an den beiden Längsträgeren angelenkt ist, dass er in Bezug auf die Längsträger (10-1, 10-2) um eine Schwenkachse (P-P), die sich entlang einer zur Längsrichtung (A-A) der Arbeitsmaschine (1) senkrechten Querrichtung (B-B) der Arbeitsmaschine (1) erstreckt, schwenkbeweglich ist;
- mindestens einen Elektromotor (80, 87) für den Vortrieb des Chassis (2) und optional für die Betätigung des Hebearms (20);
- eine Kabine (29) für die Bedienungsperson der Arbeitsmaschine (1), wobei die Kabine (29) von dem ersten Längsträger (10-2) entlang der Querrichtung (B-B) der Arbeitsmaschine (1) in eine zum zweiten Längsträger (10-2) entgegengesetzte Richtung vorspringt, wobei die Kabine (29) entlang der Längsrichtung (A-A) der Arbeitsmaschine (1) zwischen der Vorderachse (3) und der Hinterachse (4) angeordnet ist; und
ein Batteriemodul (40; 240; 340) zur Stromversorgung des mindestens einen Elektromotors (80, 98),
**dadurch gekennzeichnet, dass**
das Batteriemodul (40; 240; 340) eine Befestigungskonstruktion aufweist, die ausgebildet ist zur abnehmbaren Befestigung an dem ersten Längsträger (10-1) in einer Befestigungsposition unter der Kabine (29) entlang einer zur Längsrichtung (A-A) und zur Querrichtung (B-B) der Arbeitsmaschine (1) senkrechten vertikalen Richtung (C-C) der Arbeitsmaschine (1), wobei das Batteriemodul (40; 240; 340) in der Befestigungsposition von einer Außenseite der Arbeitsmaschine (1) zugänglich ist, um in eine Befestigungsposition gebracht werden zu können und um von der Außenseite der Arbeitsmaschine (1) aus der Befestigungsposition entfernt werden zu können, wobei die Außenseite der Arbeitsmaschine (1) in die Querrichtung (B-B) der Arbeitsmaschine (1) gedreht wird.

2. Arbeitsmaschine (1) nach Anspruch 1, wobei die Befestigungskonstruktion (270) ein Profilelement (272) umfasst, das an seinen beiden Enden abnehmbar, z.B. durch Bolzenverbindung oder Verschraubung, direkt an dem ersten Längsträger (10-1) befestigt ist.

3. Arbeitsmaschine (1) nach Anspruch 2, wobei der erste Längsträger (10-1) mindestens ein Widerlager (10-8) aufweist, das sich entlang der vertikalen Richtung (C-C) der Arbeitsmaschine (1) unter dem Profilelement (272) befindet und auf dem das Profilelement (272) aufliegt, wenn es an dem ersten Längsträger (10-1) befestigt ist.

4. Arbeitsmaschine (1) nach Anspruch 1, wobei die Arbeitsmaschine (1) ferner zwei Halteplatten (600) aufweist, die von dem ersten Längsträger (10-1) vorspringen, wobei sich die beiden Halteplatten (600) unter der Kabine (29) befinden und sich entlang der vertikalen Richtung (C-C) und der Querrichtung (B-B) der Arbeitsmaschine (1) erstrecken und entlang der Längsrichtung (A-A) der Arbeitsmaschine (1) voneinander beabstandet sind und wobei die Befestigungskonstruktion zwei Befestigungsplatten (245) umfasst, wovon jede Befestigungsplatte (245) zum Beispiel durch eine Bolzenverbindung oder Verschraubung an einer der Halteplatten (600) abnehmbar befestigt ist.

5. Arbeitsmaschine (1) nach Anspruch 1, wobei das Batteriemodul (340) ferner zwei Führungselemente (390) aufweist, wobei jedes Führungselement (390) dazu bestimmt ist, mit einem oberen Ende einer der Halteplatten (600) derart zusammenzuwirken, dass das Batteriemodul (340) in einer Translationsbewegung parallel zur Querrichtung (B-B) der Arbeitsmaschine (1) in die Befestigungsposition geführt wird.

6. Arbeitsmaschine (1) nach Anspruch 1, wobei:
- die Arbeitsmaschine (1) ferner zwei Befestigungsarme (110, 120) hat, die von dem ersten Längsträger (10-1) vorspringen, wobei sich die beiden Befestigungsarme (110 120) entlang der Querrichtung (B-B) der Arbeitsmaschine (1) unter der Kabine (29) erstrecken und entlang der Längsrichtung (A-A) der Arbeitsmaschine (1) voneinander beabstandet sind.
- die Befestigungskonstruktion (70) zwei Befestigungsbereiche (79) aufweist; und
- jeder der Befestigungsarme (110, 120) einen Gabelkopf (111, 121) aufweist und jeder der Befestigungsbereiche (79) abnehmbar an einem der Gabelköpfe (111, 121) befestigt ist.

7. Arbeitsmaschine (1) nach Anspruch 6, wobei mindestens einer der Gabelköpfe (111, 112) eine Gleitfläche (113A, 123A) hat, die sich entlang der vertikalen Richtung (C-C) und der Längsrichtung (A-A) der Arbeitsmaschine (1) erstreckt, und wobei mindestens einer der Befestigungsbereiche (79) dazu ausgebildet ist, in einer Translationsbewegung (E) parallel zur vertikalen Richtung (C-C) bis zur Befestigungsposition an der Gleitfläche (113A, 123A) zu gleiten.

8. Arbeitsmaschine (1) nach Anspruch 7, wobei mindestens einer der Befestigungsbereiche (79) ein Gleitelement aus Polymer oder Kautschuk aufweist, um an der Gleitfläche (113A, 123A) zu gleiten.

9. Arbeitsmaschine (1) nach einem der Ansprüche 6 bis 8, wobei sich das Batteriemodul (40) zum Teil bis unter einen zwischen den Längsträgern (10-1, 10-2) liegenden Raum erstreckt.

10. Arbeitsmaschine (1) nach einem der Ansprüche 6 bis 9, wobei mindestens einer der beiden Befestigungsarme (110, 210) die Kabine (29) stützt.

11. Arbeitsmaschine (1) nach einem der Ansprüche 1 bis 10, wobei ein Stromverteilerkasten (410) mit dem mindestens einen Elektromotor (80, 87) elektrisch verbunden ist und das Batteriemodul (40; 240; 340) eine einzige Stromausgangsbuchse (51) aufweist, die mit dem Stromverteilerkasten (410) elektrisch verbunden werden kann.

12. Arbeitsmaschine (1) nach Anspruch 11, wobei das Batteriemodul (40 240; 340) umfasst:
- eine Bodenplatte (42; 242), wobei die Befestigungskonstruktion (70; 270) fest mit der Bodenplatte (42; 242) verbunden ist oder diese stützt;
- mindestens zwei Batterieelemente (60), die entlang der vertikalen Richtung auf einer Oberseite der Bodenplatte (42; 242) lasten;
- mindestens einen elektrischen Anschlusskasten (50), der mit den Batterieelementen (60) elektrisch verbunden ist, wobei der elektrische Anschlusskasten (50) eine Stromausgangsbuchse (51) aufweist, die mit dem Stromverteilerkasten (410) elektrisch verbunden werden kann.

13. Arbeitsmaschine (1) nach Anspruch 12, wobei das Batteriemodul (40; 240; 340) Trennplatten (44) aufweist, die die Batterieelemente (60) trennen und an denen die Batterieelemente (60) durch abnehmbare Befestigungselemente (69) befestigt sind, wobei die Befestigungselemente (69) und die Trennplatten (44) elektrisch leitend sind und die Trennplatten (44) elektrisch miteinander und mit den Batterieelementen (60) verbunden sind, um eine gemeinsame elektrische Masse der Batteriezellen (60) zu bilden.

14. Arbeitsmaschine (1) nach einem der Ansprüche 11 bis 13, wobei der Stromverteilerkasten (410) eine Ladebuchse zum Aufladen der Batteriemodule (40; 240; 340) aufweist.

15. Arbeitsmaschine (1) nach einem der Ansprüche 1 bis 14, wobei das Batteriemodul (40; 240; 340) ferner eine Verkleidung (90; 990) aufweist, die in der Befestigungsposition des Batteriemoduls (40; 240; 340) entlang der Querrichtung (B-B) zur Außenseite des Arbeitsgeräts (1) gerichtet ist, wobei die Verkleidung (90; 990) ein oder mehrere Trittbretter (93; 993) umfasst, das oder die der Bedienungsperson der Arbeitsmaschine (1) Zugang zur Kabine (29) ermöglicht bzw. ermöglichen.

16. Arbeitsmaschine (1) nach Anspruch 15 in Verbindung mit Anspruch 14, ferner umfassend ein Ladekabel, wobei das Ladekabel mit der Ladebuchse (490) elektrisch verbindbar ist und wobei die Verkleidung (90; 990) eine Klappe (92; 992) aufweist, die Zugang zu einem Fach ermöglicht, das für die Aufnahme des Ladekabels dimensioniert ist.

## Claims

1. Construction vehicle (1) comprising
- a chassis (2) comprising a first longitudinal member (10-1) and a second longitudinal member (10-2), the first longitudinal member (10-1) and the second longitudinal member (10-2) being parallel to each other and extending parallel to a longitudinal direction (A-A) of the construction vehicle(1); and a front axle (3) and a rear axle (4) spaced apart in the longitudinal direction (A-A) of the construction vehicle (1);
- a lifting arm (20) extending parallel to the longitudinal direction (A-A) of the construction vehicle (1), the lifting arm (20) being articulated with the longitudinal members (10-1, 10-2) between the two longitudinal members so as to be pivotable relative to the longitudinal members (10-1, 10-2) about a pivot axis (P-P) extending in a transverse direction (B-B) of the construction vehicle (1) that is perpendicular to the longitudinal direction (A-A) of the construction vehicle (1);
- at least one electric motor (80, 87) for propelling the chassis (2) and optionally for driving the lifting arm (20);
- a cab (29) for an operator of the construction vehicle (1), the cab (29) projecting from the first longitudinal member (10-1) in the transverse direction (B-B) of the construction vehicle (1) in a direction away from the second longitudinal member (10-2), the cab (29) being arranged between the front axle (3) and the rear axle (4) in the longitudinal direction (A-A) of the construction vehicle (1); and
- a battery module (40; 240; 340) for supplying electricity to the at least one electric motor (80, 87),
**characterised in that** the battery module (40; 240; 340) comprises a fastening structure (70; 270) designed to be removably fastened to the first longitudinal member (10-1), in a fastening position located beneath the cab (29) in a vertical direction (C-C) of the construction vehicle (1) that is perpendicular to the longitudinal direction (A-A) and to the transverse direction (B-B) of the construction vehicle (1), and
in which the battery module (40; 240; 340) in the fastening position is accessible from an outer side of the construction vehicle (1) so that said module can be brought into or out of the fastening position from the outer side of the construction vehicle (1), the outer side of the construction vehicle (1) being oriented in the transverse direction (B-B) of the construction vehicle (1).

2. Construction vehicle (1) according to Claim 1, in which the fastening structure (270) comprises a profiled element (272) that is removably fastened, for example by bolting or screwing, at both ends thereof directly to the first longitudinal member (10-1).

3. Construction vehicle (1) according to Claim 2, in which the first longitudinal member (10-1) comprises at least one stop (10-8) that is located beneath the profiled element (272) in the vertical direction (C-C) of the construction vehicle (1) and on which the profiled element (272) rests when fastened to the first longitudinal member (10-1).

4. Construction vehicle (1) according to Claim 1, in which the construction vehicle (1) further comprises two retaining plates (600) projecting from the first longitudinal member (10-1), the two retaining plates (600) being located beneath the cab (29) and extending in the vertical direction (C-C) and the transverse direction (B-B) of the construction vehicle (1) and being spaced apart from one another in the longitudinal direction (A-A) of the construction vehicle (1), and the fastening structure comprises two fastening plates (245), each of the two fastening plates (245) being removably fastened, for example by bolting or screwing, to one of the retaining plates (600).

5. Construction vehicle (1) according to Claim 4, in which the battery module (340) further comprises two guide elements (390), each guide element (390) being intended to cooperate with an upper end of one of said retaining plates (600) so as to guide the battery module (340) towards the fastening position in a translational movement parallel to the transverse direction (B-B) of the construction vehicle (1).

6. Construction vehicle (1) according to Claim 1, in which:
- the construction vehicle (1) further comprises two fastening arms (110, 120) projecting from the first longitudinal member (10-1), the two fastening arms (110, 120) extending beneath the cab (29) in the transverse direction (B-B) of the construction vehicle (1) and being spaced apart from one another in the longitudinal direction (A-A) of the construction vehicle (1);
- the fastening structure (70) comprises two fastening portions (79); and
- each of the two fastening arms (110, 120) has a fork (111, 121), each of the fastening portions (79) being removably fastened to one of the forks (111, 121).

7. Construction vehicle (1) according to Claim 6, in which at least one of the forks (111, 121) has a sliding surface (113A, 123A) extending in the vertical direction (C-C) and the longitudinal direction (A-A) of the construction vehicle (1), and at least one of said fastening portions (79) is designed to slide on the sliding surface (113A, 123A) in a translational movement (E) parallel to the vertical direction (C-C) into the fastening position.

8. Construction vehicle (1) according to Claim 7, in which at least one of said fastening portions (79) comprises a sliding element (79A) made of polymer or rubber for sliding on the sliding surface (113A, 123A).

9. Construction vehicle (1) according to any one of Claims 6 to 8, in which the battery module (40) extends in part beneath a space between the longitudinal members (10-1, 10-2).

10. Construction vehicle (1) according to any one of Claims 6 to 9, in which at least one of the two fastening arms (110, 120) supports the cab (29).

11. Construction vehicle (1) according to any one of Claims 1 to 10, in which a power distribution box (410) is electrically connected to said at least one electric motor (80, 87) and the battery module (40; 240; 340) comprises a single power output socket (51) electrically connectable to the power distribution box (410).

12. Construction vehicle (1) according to Claim 11, in which the battery module (40; 240; 340) comprises:
- a base plate (42; 242), the fastening structure (70; 270) being rigidly connected to or supporting the base plate (42; 242);
- at least two battery elements (60) resting on an upper face of the base plate (42; 242), in the vertical direction (C-C);
- at least one electrical connection box (50) electrically connected to the battery elements (60), the electrical connection box (50) comprising a power output socket (51) electrically connectable to the power distribution box (410).

13. Construction vehicle (1) according to Claim 12, in which the battery module (40; 240; 340) has separator plates (44) separating the battery elements (60) and to which the battery elements (60) are fastened by means of removable fastening elements (69), and in which the removable fastening elements (69) and the separator plates (44) are electrically conductive, the separator plates (44) being electrically connected to each other and to the battery elements (60) to form a common electrical ground for the battery elements (60).

14. Construction vehicle (1) according to any one of Claims 11 to 13, in which the power distribution box (410) includes a charging socket for charging the battery module (40; 240; 340).

15. Construction vehicle (1) according to any one of Claims 1 to 14, in which the battery module (40; 240; 340) further comprises a fairing (90; 990), the fairing (90; 990) facing away from the construction vehicle (1) in the transverse direction (B-B) in the fastening position of the battery module (40; 240; 340), in which the fairing (90; 990) has one or more steps (93; 993) enabling the operator of the construction vehicle (1) to access the cab (29).

16. Construction vehicle (1) according to Claim 15 in combination with Claim 14, further comprising a charging cable, the charging cable being electrically connectable to the charging socket (490), and in which the fairing (90; 990) has a hatch (92; 992) allowing access to a compartment dimensioned to contain the charging cable.
